# EUROPEAN PATENT SPECIFICATION

(11) **EP 2 551 975 B1**
(45) Date of publication and mention of the grant of the patent: **19.12.2018**
(21) Application number: 12178387.2
(22) Date of filing: 27.07.2012
(51) Int. Cl.: H02G 3/04, H02G 3/06

(54) **Support system for cabling and piping**
Stützsystem zum Verkabeln und Verrohren
Système de support de câbles et de canalisations

(30) Priority: 28.07.2011 GB 201113032
(43) Date of publication of application: 30.01.2013
(73) Proprietor: Legrand Electric Limited, Birmingham B19 2LF (GB)
(72) Inventor: Atkinson, David, Birmingham, B19 2LF (GB); Wilmore, Stephen, Birmingham, B19 2LF (GB)
(74) Representative: Evans, Marc Nigel

(56) References cited:
- EP-A1- 0 599 634
- WO-A1-92/04755
- WO-A1-2013/176489
- GB-A- 2 476 569
- US-A- 4 733 986
- US-A1- 2011 013 978

## Description

The present invention relates to a device comprising components of a support system for cabling or piping, and to a method of assembling and fastening together components of a modular support system. In some embodiments, it relates to a method of fastening together components of a ladder-type support system or cable tray system.

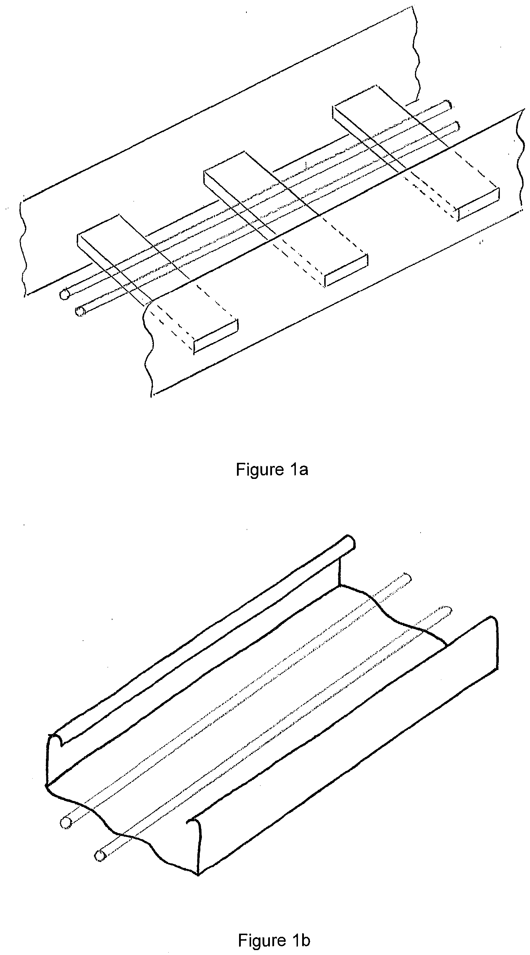

With reference to Figure 1a, a ladder-type support system comprises a series of parallel "rungs" supported at their ends on a pair of parallel side rails. This kind of support system is typically used with both the rungs and side rails installed in a horizontal orientation, and with the rungs used to support the cabling or piping. With reference to Figure 1b, a cable tray system generally has a planar base with relatively low sides walls at both lateral sides of the base. In order to facilitate the installation of long lengths of these cable support systems, the support systems are provided as relatively short longitudinal sections with extra components (couplers) for coupling together the short longitudinal sections.

A conventional method for coupling together such short longitudinal sections is as follows. Each side rail of the short longitudinal sections and the coupler define one or more parallel lines of holes, and two short longitudinal sections are fastened together via the coupler by inserting bolts through respective pairs of corresponding holes in the one or more lines of holes of the coupler and short longitudinal sections, and screwing a nut down tight onto each bolt.

The inventors have identified the challenge of providing a technique that better facilitates the coupling of components of a support system for cabling or piping.

It is an aim of this invention to meet this challenge.

EP0599634 describes a device for coupling cable tray components. WO02/04755 describes a spring clip for connecting components of a cable tray system.

GB2476569 describes a connecting device for connecting cable tray sections. US4733986 describes a splice plate for joining cable tray sections.

There is hereby provided a method according to claim 1.

Further features of specific embodiments of the method are recited in dependent claims 2 to 5.

In one embodiment, said first and second coupling sections, said coupler and said clip are made of galvanised steel or stainless steel.

There is also hereby provided a device according to claim 6.

Further features of specific embodiments of the device are recited in claims 7 to 10.

In one embodiment, said first and second coupling sections and said coupler are made of galvanised steel or stainless steel.

There is also hereby provided a device according to claim 11.

Embodiments of the invention are described in detail hereunder, by way of example only, with reference to the accompanying drawings, in which:
Figure 2 illustrates two short ladder-shaped sections, a coupler and a clip of a support system for cabling/piping;
Figures 3 and 4 illustrate the assembly and fastening of the two short ladder-shaped sections of Figure 2 to the coupler of Figure 2;
Figure 5 shows plan and side views of the clip of Figure 2;
Figure 6 illustrates the assembly and fastening of the two short ladder-shaped sections of Figure 2 to the coupler of Figure 2; and
Figure 7 illustrates the assembly and fastening of two short cable tray sections to one another via a cable tray section coupler in accordance with a technique according to an embodiment of the present invention.

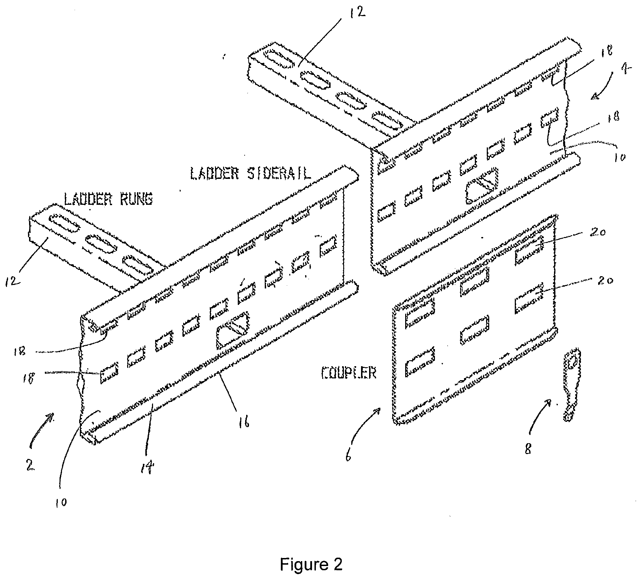

With reference to Figure 2, a support system for cabling/piping comprises a plurality of ladder-shaped sections 2 and 4, a coupler 6 and a clip 8. Each ladder-shaped section 2, 4 comprises a pair of parallel side rails 10 (only one is shown in Figure 2) each being substantially U-shaped in cross-section. The pair of side rails 10 support a series of parallel cross-bars (rungs) 12 arranged substantially perpendicular to the side rails 10. The parallel cross-bars 12 are welded to the side rails 10. The side rails 10 are made by cutting sheet metal into long rectangular sections and bending the long edges to create the above-mentioned U-shape with lips 14 that present rounded outwardly-facing longitudinal edges 16. Each side rail 10 also defines two parallel series of apertures 18, which are provided by a cut-out technique.

The coupler 6 comprises a relatively short length of sheet metal also having a substantially U-shaped section generally matching that of the side rails 10. The coupler 6 is of slightly reduced width compared to the side rails 10 so that it can closely fit into the side rails 10. The coupler 6 is slid into a side rail 10 from one longitudinal end of the side rail 10. The coupler 6 also defines two parallel series of apertures 20, which are also provided by a cut-out technique. The two series of apertures 20 defined in the coupler are positioned such that they align with the two series of apertures defined in the side rail 10 when the coupler 6 is fit into the side rail 10.

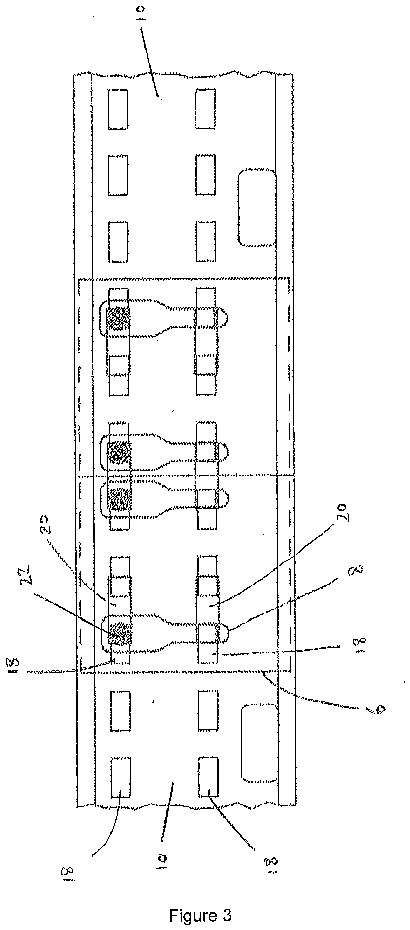

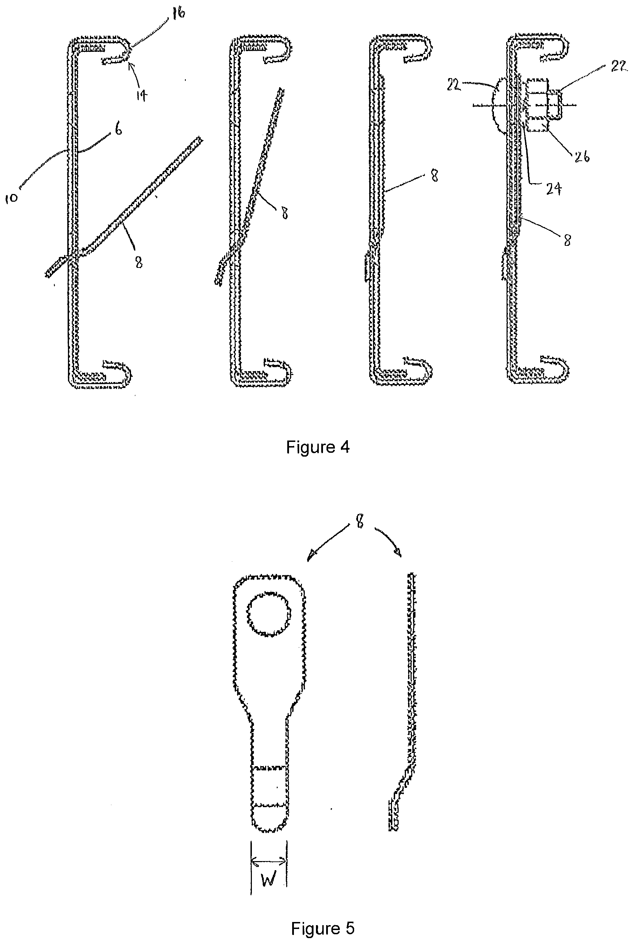

With particular reference to Figures 3 to 5, the coupler 6 is slid into a side rail 10 to a position at which a leading half of the coupler 6 overlaps with the leading end portion of the side rail 10. In this position, at least one of the upper series of holes 20 of the coupler 6 has at least a portion that coincides with at least a portion of a respective one of the corresponding series of holes 18 of the side rail 10; and at least a portion of one of the lower series of holes 20 in the coupler coincides with at least a portion of a respective one of the corresponding series of holes in the side rail 10. The clip 8 has a lower end designed to fit through the through hole defined by the coincidence of lower series holes (or portions thereof) in the coupler 6 and side rail 10, and an upper end defining a hole that aligns with the through hole defined by the coincidence of upper series holes (or portions thereof) in the coupler 6 and side rail 10 when the lower end of the clip is fitted into the through hole defined by the coincidence of lower series holes (or portions thereof) in the coupler 6 and side rail 10. With particular reference to Figure 4, the technique of securing the side rail to the coupler 6 involves first fitting the clip 8 into position with its lower end in the through hole defined by the coincidence of lower series holes (or portions thereof) in the coupler 6 and side rail 10, and with the bolt-receiving hole defined in its upper end aligned with the through hole defined by the coincidence of upper series holes (or portions thereof) in the coupler 6 and side rail 10. Then, with the clip 8 in this position, a threaded bolt 22 is inserted through both the through hole defined by the coincidence of upper series holes (or portions thereof) in the coupler 6 and side rail 10 and through the hole in the clip 8; a spring washer 24 is fitted onto the bolt 22; and a complementary nut 26 is then screwed tightly down onto the bolt 22. The clip 8 functions to restrict rotation of the side rail 10 and coupler 6 relative to each other about the bolt 22 by which it is fastened to the coupler 6 and side rail 10.

A separate coupler 6 is secured to the opposite side rail (not shown) of the same ladder-shaped section in exactly the same way.

The other halves of the two couplers 6 now secured to the first ladder-shaped section (i.e. the halves of the couplers 6 protruding from the ends of the side rails of the first ladder-shaped section) are then slid into respective side rails 10 of a second ladder-shaped section such that the ends of the side rails 10 of the two ladder-shaped sections substantially meet or approach each other at about the middle of the couplers 6. The second ladder-shaped section is then secured to the couplers 6 in the same way as described above for the first ladder-shaped section.

In Figure 3, the lower end of the clip 8 is shaped such that it both fits through the through hole defined by the coincidence of lower series holes (or portions thereof) in the coupler 6 and side rail 10, and also lies against a reverse face of the side rail 10 when the bolt-receiving hole 9 defined in the upper end of the clip 8 aligns with the through hole defined by the coincidence of upper series holes (or portions thereof) in the coupler 6 and side rail 10. The lower end of the clip 8 includes a straight strip portion that lies parallel to the upper end of the clip 8 defining said hole for receiving a bolt 22, but is offset from the upper end by an amount corresponding to (or slightly less than) the combined metal sheet thicknesses of the coupler 6 and side rail 10. The clip 8 thus provides the additional advantage of restricting leverage of the lower part of the coupler 6 away from the lower part of the side rail 10 (i.e. the parts of the coupler and side rail distal from the bolt fastening), without the need for an additional bolt fastening between the lower parts of the coupler and side rail 10.

In Figures 3 to 5, at least two upper series holes of the coupler 6 (or portions thereof) coincide with respective upper series holes (or portions thereof) of the corresponding side rail 10; and at least two bolts 22 and two clips 8 are used to secure the coupler 6 to the side rail 10. The holes defined in the coupler 6 and side rail 10 are slots having a width greater than the diameter of the bolt 22 and the width of the lower end of the clip 8, but the slots are positioned such that when half of the coupler 6 is slid into the end of a side rail 10, (i) the leading portions of at least two of the upper series slots of the coupler 6 overlap with the leading portions of respective upper series slots of the side rail 10 by an extent corresponding to about the diameter of the bolt 22; and (ii) the leading portions of at least two of the lower series slots of the coupler 6 overlap with the leading portions of respective lower series slots of the side rail 10 by an extent corresponding to about the width of the lower end of the clip 8. In this way, the size of the holes can be increased (and thus the weight of the ladder-sections decreased) whilst continuing to restrict movement away from each other (i.e. in a direction parallel to the length of the side rails 10) of the two ladder-shaped sections joined by the coupler 6.

In the technique described above, all the clips 8 are fastened to the side rail and coupler via upper series holes in the coupler 6 and side rail 10 and extend through lower series holes in the coupler 6 and side rail 10. However, it is also possible to reverse the orientation of one, some or all of the clips 8, such that one, some or all of the clips 8 are fastened to the side rail and coupler via lower series holes in the coupler 6 and side rail 10 and extend through upper series holes in the coupler 6 and side rail 10.

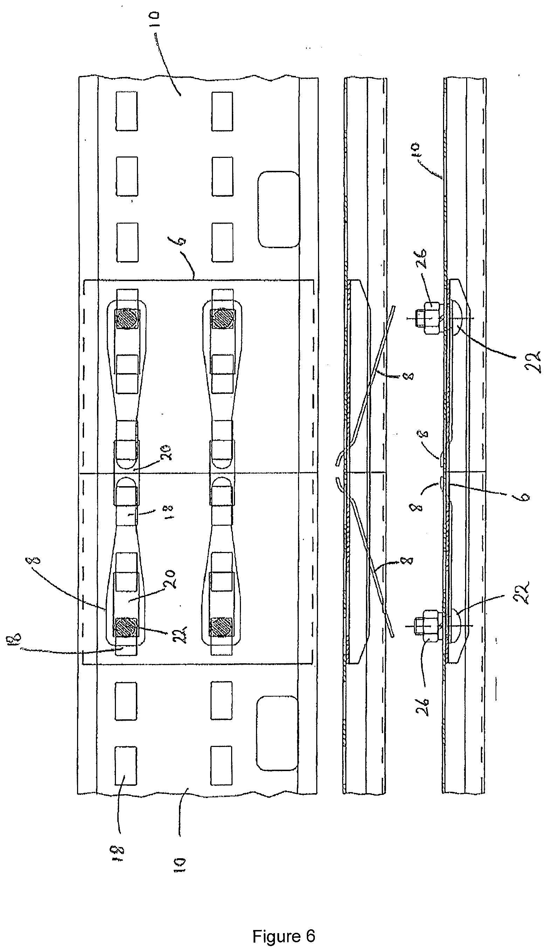

In one variation illustrated in Figure 6, the clips 8 are instead arranged parallel to the lines of holes 18, 20 in the ladder sections and coupler. In other words, one end of the clip 8 passes through a coincidence of holes in the same line of holes via which the other end of that clip 8 is fastened to the ladder section and the coupler.

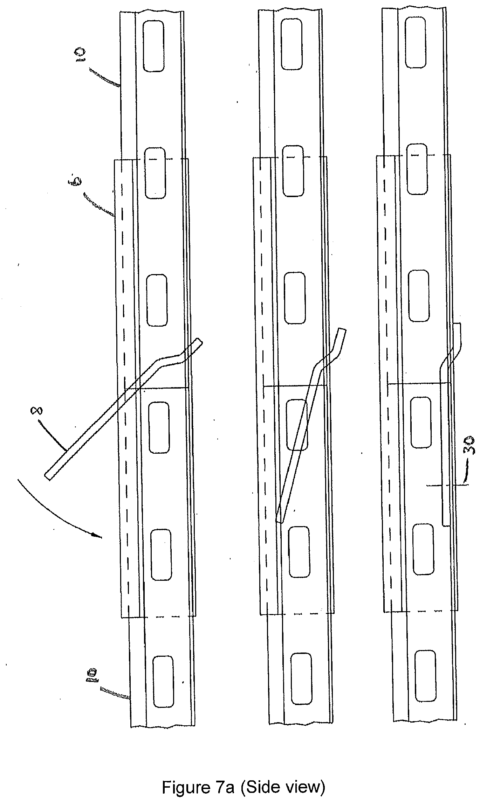

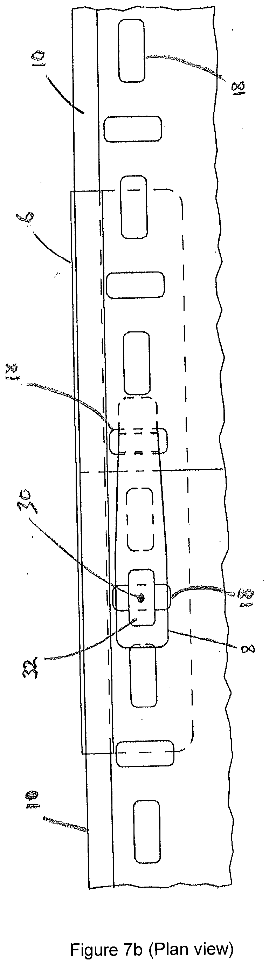

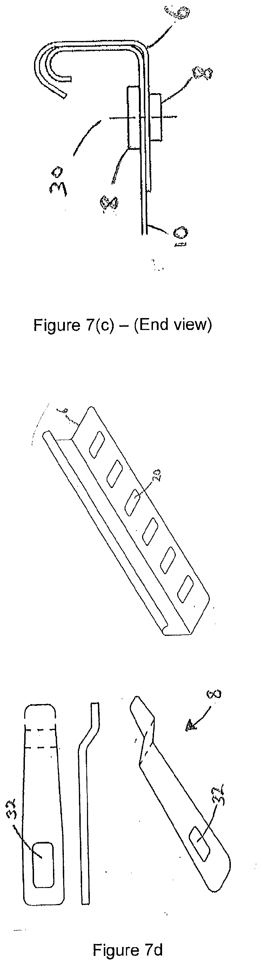

In an embodiment of the claimed invention illustrated in Figure 7 (for the example of coupling sections 10 of a cable tray system): one end of the clip 8 is fastened to only one of the two cable tray sections 10 and the coupler 6 via a coincidence of holes 18, 20 in said one of the two cable tray sections and the coupler 6; and the opposite end of the clip 8 passes through a coincidence of holes 18, 20 in only the other of the two cable sections 10 and the coupler 6. Numeral 30 indicates the coincidence of holes 18 and 20 in the cable tray section and the coupler through which a separate bolt 22 (or captive bolt, as discussed below) is passed for fastening the clip to the cable tray section and the coupler.

The positions of the slots 18, 20 and the size of the clip 8 are chosen so that when the joint between two ladder or cable tray sections 10 is subjected to bending loads, the clip 8 prevents relative movement of the coupler 6 and sections 10. This provides the joint with good bending strength.

In the embodiment described above, the fastening of one end of the clip 8 to a cable ladder section or cable tray section 10 and the coupler 6 is achieved by means of a separate bolt 22 and nut 26. However, one alternative fastening technique involves replacing the separate bolt 22 with a captive bolt secured to the end of the clip instead of providing a through hole 32 at that end of the clip 8. Another alternative technique involves replacing the free nut 26 with a screw-threaded hole in the coupler 6 instead of the slot 20.

The ladder-shaped sections (both side rails and rungs), cable tray sections, couplers and clips can all be made, for example, from galvanised steel or stainless steel.

A sequence of ladder-shaped sections or cable tray sections connected together in the way described above can be used, for example, to support power cables, data cables, flow pipes etc. inside or outside of buildings.

In addition to any modifications explicitly mentioned above, it will be evident to a person skilled in the art that various other modifications of the described embodiment may be made within the scope of the invention.

## Claims

1. A method comprising: assembling first and second coupling sections and a coupler (6, 10) of a support system to form an assembly comprising said coupler (6) overlapping with end portions of both said first and second coupling sections (10), and using a fastener (30) at a coincidence of holes of said assembly to fasten together said first coupling section, said coupler and a proximal portion of a clip (8) also having a distal portion that fits through a hole defined by another coincidence of holes or portions thereof (18, 20) defined in said second coupling section and said coupler, **characterised in that** said fastener (30) comprises at least a threaded bolt (22) and a complementary threaded nut (26), and the method comprises inserting said bolt through said coincidence of holes, and forcibly screwing the nut onto the bolt so as to compress said first coupling section (10) and said coupler (6) and said proximal portion of said clip (8) between said nut and a head of said bolt.

2. A method according to claim 1, wherein said distal portion of said clip includes an end portion that lies against a surface of said assembly opposite to a surface against which said proximal portion lies.

3. A method according to claim 2, wherein said clip is configured such that upon screwing said threaded nut onto said threaded bolt, said proximal portion and said end portion of said distal portion become forced against respective opposite surfaces of said assembly.

4. A method according to claim 2 or claim 3, wherein said proximal portion and said end portion of said distal portion are substantially parallel to one another and are connected by a interconnecting diagonal portion.

5. A method according to any of claims 1 to 4, wherein said first and second coupling sections comprise cable tray sections of a cable tray system.

6. A device comprising: first and second coupling sections and a coupler of a support system capable of being assembled together to form an assembly comprising said coupler (6) overlapping with end portions of said first and second coupling sections (10), and a fastener (30) to fasten together at a coincidence of holes of said assembly said first coupling section, said coupler and a proximal portion of a clip (8) also having a distal portion that fits through a hole defined by another coincidence of holes or portions thereof (18, 20) defined in said second coupling section and said coupler, **characterised in that** the fastener comprises a threaded bolt (22) and a complementary threaded nut (26), wherein said bolt is insertable through said coincidence of holes, and said nut is forcibly screwable onto the bolt so as to compress said first coupling section, said coupler and said proximal portion of said clip between said nut and a head of said bolt.

7. A device according to claim 6, wherein said distal portion of said clip includes an end portion that lies against a surface of said assembly opposite to a surface against which said proximal portion lies.

8. A device according to claim 7, wherein said clip is configured such that upon screwing said threaded nut onto said threaded bolt, said proximal portion and said end portion of said distal portion become forced against respective opposite surfaces of said assembly.

9. A device according to claim 7 or claim 8, wherein said proximal portion and said end portion of said distal portion are substantially parallel to one another and are connected by a interconnecting diagonal portion.

10. A device according to any of claims 7 to 9, wherein said first and second coupling sections comprise cable tray sections of a cable tray system.

11. A device comprising: two sections of a cable tray system (10) and a coupler (6) capable of being assembled together to form an assembly comprising said coupler (6) overlapping with end portions of both said two sections (10), and a fastener (30) to fasten together at a coincidence of holes of said assembly one of said sections (10) and said coupler (6) and a proximal portion of a clip (8) also having a distal portion that fits through a hole defined by another coincidence of holes (18, 20) defined in the other of the two sections (10) and the coupler (6); **characterised in that** said fastener comprises either (i) a captive bolt secured to said proximal portion of the clip (8) and a separate nut (26), or (ii) a screw-threaded hole in the coupler (6) at said coincidence of holes and a separate bolt (22).

## Patentansprüche

1. Verfahren, umfassend: Zusammenbauen eines ersten und eines zweiten Kopplungsabschnitts und eines Kopplers (6, 10) eines Stützsystems, um eine Baueinheit zu bilden, die den Koppler (6) umfasst, der mit Endteilen von sowohl dem ersten als auch dem zweiten Kopplungsabschnitt (10) überlappt, und Verwenden eines Befestigungselements (30) an einem Zusammentreffen von Löchern der Baueinheit, um den ersten Kopplungsabschnitt, den Koppler und einen proximalen Teil einer Klammer (8) zusammen zu befestigen, wobei die Klammer auch einen distalen Teil aufweist, der durch ein Loch passt, das von einem anderen Zusammentreffen von Löchern oder Teilen davon (18, 20) definiert wird, die in dem zweiten Kopplungsabschnitt und dem Koppler definiert sind, **dadurch gekennzeichnet, dass** das Befestigungselement (30) mindestens einen Gewindebolzen (22) und eine komplementäre Gewindemutter (26) umfasst, und das Verfahren ein Einsetzen des Bolzens durch das Zusammentreffen von Löchern und ein Schrauben der Mutter mit Druck auf den Bolzen umfasst, um den ersten Kopplungsabschnitt (10) und den Koppler (6) und den proximalen Teil der Klammer (8) zwischen der Mutter und einem Kopf des Bolzens zusammenzudrücken.

2. Verfahren nach Anspruch 1, wobei der distale Teil der Klammer einen Endteil beinhaltet, der gegen eine Oberfläche der Baueinheit liegt, die entgegengesetzt zu einer Oberfläche ist, gegen die der proximale Teil liegt.

3. Verfahren nach Anspruch 2, wobei die Klammer derart konfiguriert ist, dass nach Schrauben der Gewindemutter auf den Gewindebolzen der proximale Teil und der Endteil des distalen Teils gegen jeweilige entgegengesetzte Oberflächen der Baueinheit gezwängt werden.

4. Verfahren nach Anspruch 2 oder 3, wobei der proximale Teil und der Endteil des distalen Teils im Wesentlichen parallel zueinander sind und durch einen diagonalen Verbindungsteil verbunden sind.

5. Verfahren nach einem der Ansprüche 1 bis 4, wobei der erste und der zweite Kopplungsabschnitt Kabelrinnenabschnitte eines Kabelrinnensystems umfassen.

6. Vorrichtung, umfassend: einen ersten und einen zweiten Kopplungsabschnitt und einen Koppler eines Stützsystems, die zusammengebaut werden können, um eine Baueinheit zu bilden, die den Koppler (6) umfasst, der mit Endteilen von dem ersten und dem zweiten Kopplungsabschnitt (10) überlappt, und ein Befestigungselement (30), um den ersten Kopplungsabschnitt, den Koppler und einen proximalen Teil einer Klammer (8) an einem Zusammentreffen von Löchern der Baueinheit zusammen zu befestigen, wobei die Klammer auch einen distalen Teil aufweist, der durch ein Loch passt, das von einem anderen Zusammentreffen von Löchern oder Teilen davon (18, 20) definiert wird, die in dem zweiten Kopplungsabschnitt und dem Koppler definiert sind, **dadurch gekennzeichnet, dass** das Befestigungselement einen Gewindebolzen (22) und eine komplementäre Gewindemutter (26) umfasst, wobei der Bolzen durch das Zusammentreffen von Löchern einsetzbar ist und die Mutter mit Druck auf den Bolzen schraubbar ist, um den ersten Kopplungsabschnitt, den Koppler und den proximalen Teil der Klammer zwischen der Mutter und einem Kopf des Bolzens zusammenzudrücken.

7. Vorrichtung nach Anspruch 6, wobei der distale Teil der Klammer einen Endteil beinhaltet, der gegen eine Oberfläche der Baueinheit liegt, die entgegengesetzt zu einer Oberfläche ist, gegen die der proximale Teil liegt.

8. Vorrichtung nach Anspruch 7, wobei die Klammer derart konfiguriert ist, dass nach Schrauben der Gewindemutter auf den Gewindebolzen der proximale Teil und der Endteil des distalen Teils gegen jeweilige entgegengesetzte Oberflächen der Baueinheit gezwängt werden.

9. Vorrichtung nach Anspruch 7 oder 8, wobei der proximale Teil und der Endteil des distalen Teils im Wesentlichen parallel zueinander sind und durch einen diagonalen Verbindungsteil verbunden sind.

10. Vorrichtung nach einem der Ansprüche 7 bis 9, wobei der erste und der zweite Kopplungsabschnitt Kabelrinnenabschnitte eines Kabelrinnensystems umfassen.

11. Vorrichtung, umfassend: zwei Abschnitte eines Kabelrinnensystems (10) und einen Koppler (6), die zusammengebaut werden können, um eine Baueinheit zu bilden, die den Koppler (6) umfasst, der mit Endteilen von den beiden Abschnitten (10) überlappt, und ein Befestigungselement (30), um einen der Abschnitte (10) und den Koppler (6) und einen proximalen Teil einer Klammer (8) an einem Zusammentreffen von Löchern der Baueinheit zusammen zu befestigen, wobei die Klammer auch einen distalen Teil aufweist, der durch ein Loch passt, das von einem anderen Zusammentreffen von Löchern (18, 20) definiert wird, die in dem anderen der zwei Abschnitte (10) und dem Koppler (6) definiert sind; **dadurch gekennzeichnet, dass** das Befestigungselement entweder (i) einen unverlierbaren Bolzen, der an dem proximalen Teil der Klammer (8) gesichert ist, und eine separate Mutter (26) oder (ii) ein mit einem Gewinde versehenes Loch in dem Koppler (6) an dem Zusammentreffen von Löchern und einen separaten Bolzen (22) umfasst.

## Revendications

1. Procédé comprenant : l'assemblage de première et deuxième sections de couplage et d'un coupleur (6, 10) d'un système de support pour former un ensemble comprenant ledit coupleur (6) en chevauchement avec des portions d'extrémité des deux desdites première et deuxième sections de couplage (10), et l'utilisation d'un dispositif de fixation (30) au niveau d'une coïncidence de trous dudit ensemble pour fixer ensemble ladite première section de couplage, ledit coupleur et une portion proximale d'un clip (8) possédant également une portion distale qui peut passer à travers un trou défini par une autre coïncidence de trous ou de portions de celui-ci (18, 20) définis dans ladite deuxième section de couplage et ledit coupleur, **caractérisé en ce que** ledit dispositif de fixation (30) comprend au moins un boulon fileté (22) et un écrou fileté complémentaire (26), et le procédé comprend l'insertion dudit boulon à travers ladite coïncidence de trous, et le vissage forcé de l'écrou sur le boulon de sorte à comprimer ladite première section de couplage (10) et ledit coupleur (6) et ladite portion proximale dudit clip (8) entre ledit écrou et une tête dudit boulon.

2. Procédé selon la revendication 1, dans lequel ladite portion distale dudit clip inclut une portion d'extrémité qui repose contre une surface dudit ensemble à l'opposé d'une surface contre laquelle repose ladite portion proximale.

3. Procédé selon la revendication 2, dans lequel ledit clip est configuré de telle sorte que lors du vissage dudit écrou fileté sur ledit boulon fileté, ladite portion proximale et ladite portion d'extrémité de ladite portion distale sont amenées par forçage contre des surfaces opposées respectives dudit ensemble.

4. Procédé selon la revendication 2 ou la revendication 3, dans lequel ladite portion proximale et ladite portion d'extrémité de ladite portion distale sont substantiellement parallèles l'une à l'autre et sont raccordées par une portion diagonale de raccordement réciproque.

5. Procédé selon l'une quelconque des revendications 1 à 4, dans lequel lesdites première et deuxième sections de couplage comprennent des sections de chemin de câbles d'un système de chemin de câbles.

6. Dispositif comprenant : des première et deuxième sections de couplage et un coupleur d'un système de support aptes à être assemblés ensemble pour former un ensemble comprenant ledit coupleur (6) en chevauchement avec des portions d'extrémité desdites première et deuxième sections de couplage (10), et un dispositif de fixation (30) pour fixer ensemble, au niveau d'une coïncidence de trous dudit ensemble, ladite première section de couplage, ledit coupleur et une portion proximale d'un clip (8) possédant également une portion distale qui peut passer à travers un trou défini par une autre coïncidence de trous ou de portions de celui-ci (18, 20) définis dans ladite deuxième section de couplage et ledit coupleur, **caractérisé en ce que** le dispositif de fixation comprend un boulon fileté (22) et un écrou fileté complémentaire (26), dans lequel ledit boulon est insérable à travers ladite coïncidence de trous, et ledit écrou est vissable de manière forcée sur le boulon de sorte à comprimer ladite première section de couplage, ledit coupleur et ladite portion proximale dudit clip entre ledit écrou et une tête dudit boulon.

7. Dispositif selon la revendication 6, dans lequel ladite portion distale dudit clip inclut une portion d'extrémité qui repose contre une surface dudit ensemble à l'opposé d'une surface contre laquelle repose ladite portion proximale.

8. Dispositif selon la revendication 7, dans lequel ledit clip est configuré de telle sorte que lors du vissage dudit écrou fileté sur ledit boulon fileté, ladite portion proximale et ladite portion d'extrémité de ladite portion distale sont amenées par forçage contre des surfaces opposées respectives dudit ensemble.

9. Dispositif selon la revendication 7 ou la revendication 8, dans lequel ladite portion proximale et ladite portion d'extrémité de ladite portion distale sont substantiellement parallèles l'une à l'autre et sont raccordées par une portion diagonale de raccordement réciproque.

10. Dispositif selon l'une quelconque des revendications 7 à 9, dans lequel lesdites première et deuxième sections de couplage comprennent des sections de chemin de câbles d'un système de chemin de câbles.

11. Dispositif comprenant : deux sections d'un système de chemin de câbles (10) et un coupleur (6) aptes à être assemblés ensemble pour former un ensemble comprenant ledit coupleur (6) en chevauchement avec des portions d'extrémité des deux desdites sections (10), et un dispositif de fixation (30) pour fixer ensemble, au niveau d'une coïncidence de trous dudit ensemble, l'une desdites sections (10) et ledit coupleur (6) et une portion proximale d'un clip (8) possédant également une portion distale qui peut passer à travers un trou défini par une autre coïncidence de trous (18, 20) définis dans l'autre des deux sections (10) et le coupleur (6) ; **caractérisé en ce que** ledit dispositif de fixation comprend soit (i) un boulon captif assujetti à ladite portion proximale du clip (8) et un écrou séparé (26), soit (ii) un trou à filetage dans le coupleur (6) au niveau de ladite coïncidence de trous et un boulon séparé (22).
